# EUROPEAN PATENT SPECIFICATION

(11) **EP 2 138 712 B1**
(45) Date of publication and mention of the grant of the patent: **14.03.2012**
(21) Application number: 08158930.1
(22) Date of filing: 25.06.2008
(51) Int. Cl.: F02N 11/08, B60R 16/03

(54) **Voltage stabilization in a start-stop vehicle.**
Spannungsstabilisierung für Start-Stopp Fahrzeug
Stabilisation de tension pour véhicule de type start-stop

(43) Date of publication of application: 30.12.2009
(73) Proprietor: Volvo Car Corporation, 405 31 Göteborg (SE)
(72) Inventor: Niklasson, David, 423 34, Torslanda (SE)
(74) Representative: VALEA AB

(56) References cited:
- EP-A- 0 753 925
- EP-A- 0 984 543
- EP-A- 1 137 150
- DE-A1- 4 028 242
- FR-A- 2 687 511

## Description

### TECHNICAL FIELD

The present invention relates to the start-stop concept of motor vehicles according to which the engine of the vehicle is stopped when the vehicle velocity is below or equal to a certain threshold value and automatically start the engine again when the drivers' intention of the driver to drive off is detected. In other words, the invention relates to motor vehicles with a so called start-stop function.

### BACKGROUND

During normal operation the combustion engine in a traditional motor vehicle is only turned off at exceptional occasions and always when the vehicle is stationary. However, to save energy it has now become increasingly more common to stop the combustion engine of the vehicle when the vehicle velocity is below or equal to a certain threshold value and automatically start the engine again when the driver intends to drive off and/or intends to increase the vehicle velocity, which can e.g. be detected by sensors reacting on e.g. clutch and/or break release and/or throttle pedal actuation etc. Vehicles arranged to operate in this manner may be called a start-stop vehicle.

When the vehicle engine of a start stop-vehicle is turned off under these conditions, the operation of the electrical systems normally being supplied by the vehicle generator when the vehicle is running must be continued after the turn off, especially if the vehicle is still cruising. This task falls upon the vehicle battery and its function, which must be accordingly dimensioned.

However, when the engine in the start-stop vehicle is automatically restarted by the starter motor the voltage supplying the ordinary electrical systems of the vehicle will temporarily drop to e.g. about 5-7 Volts due to the high current consumption of the vehicle starter motor. This causes a reduced capacity or even a complete stop/reset of the ordinary electrical systems being supplied by the battery, e.g. at 12 Volts. This is not acceptable in a start-stop vehicle, since the ordinary electrical systems shall be kept on and not subjected to a reset. On the whole, the driver of the vehicle shall not experience any functional loss. This is in clear contrast to the operation of a traditional motor vehicle wherein the electrical system of the vehicle is maintained in a turned off state while the engine is started by the starter motor.

To avoid a drop in the voltage to the ordinary electrical systems in connection with current consumption from the starter engine in a conventional vehicle it is known to disconnect these systems from the starter motor when the motor is activated. In such known systems, a first battery is used for the starter motor and a second battery is used for the ordinary electrical systems while the starter motor is activated. During activation of the starter motor the second battery is disconnected by means of relays from the starter motor and the first battery. In these known solutions the first battery must have a large capacity due to the high current consumption of the vehicle starter motor. The second battery must also have a large capacity due to the current consumption of the vehicle electrical system, which may be considerable and potentially long-lasting e.g. when the vehicle engine and hence the vehicle electrical generator (i.e. the alternator of the vehicle) are turned off during parking, at the same time as one or more of the electrical systems of the vehicle may still be turned on, e.g. the lights, the air condition, the windshield wipers, the infotainment system etc may still be turned on. Hence, both the first and the second battery must be able to store a high amount of energy and both batteries are therefore large, e.g. capable of storing more that 50, 75 or 100 Ah. The two batteries are usually separated by a relay arrangement. The combined weight of the two full sized batteries has a detrimental effect of the CO2 emission from the vehicle. Similarly, the use of two full sized batteries has a detrimental effect in terms of packaging in the vehicle.

Moreover, the use of relay switches in the known solutions, like FR 2687511, causes a number of problems. Relays have a tendency to malfunction after a limited number of activations. Moreover, relays cause time delays and electrical noise and/or noise measured in dB at activation, and will typically require complicated activation chains and diagnostic procedures. In addition, even though the relays may be designed for high currents they must still be able to handle only a few mA when the vehicle is parked so as to maintain alarm functions etc. Thus, due to the very low currents and the low voltages that are normally used in vehicles of today it follows that the relay contacts are sensitive to resistive oxide that prevents the contacts from leading the small current in a parked vehicle, this is particularly so if the contacts are exposed to the air oxygen (e.g. if the contacts are not kept in vacuum or are otherwise kept isolated from the surrounding air). Moreover, if the relays fail the vehicle may eventually have no power supply at all.

Other proposals have used diodes to disconnect the ordinary electrical systems from the starter motor when the motor is activated. However, there is always a voltage drop (e.g. 0,7 V) over a diode which causes energy losses and hence higher fuel consumption, this is particularly so considering that the currents from the generator through the diodes may be 100-200 A during normal operation.

Hence, there is a need for an improved start-stop concept of motor vehicles according to which at least one of the drawbacks identified above is eliminated or mitigated.

### SUMMARY OF THE INVENTION

An object of the present invention is to eliminate or mitigate at least one of the drawbacks identified above.

This has been accomplished by a first aspect of the invention as defined in claim 1 being directed to a voltage stabilizing system for stabilizing the voltage provided to an electrical system in a start-stop vehicle at an automated crank. The system comprises a primary power storage, a secondary power storage and a first switch arrangement. The first switch arrangement is adapted to alternately establish and terminate communication of power between a primary side comprising the primary power storage and a starter motor of the vehicle, and a consumer side comprising an electrical system and an alternator of the vehicle.

The stabilizing system is further characterized by comprising a second switch arrangement adapted to alternately establish and terminate communication of power between the consumer side and a secondary side comprising the secondary power storage. The stabilizing system also comprises a control unit adapted to operate said first switch arrangement so as to disconnect the primary power storage from the consumer side at an automated crank, and to connect the secondary power storage to the consumer side at an automated crank.

Similarly, at least one of the drawbacks identified above has been eliminated or mitigated by a second aspect of the invention defined in claim 9 being directed to a method in a voltage stabilizing system for stabilizing the voltage provided to an electrical system in a start-stop vehicle at an automated crank. The system comprises a primary power storage and a secondary power storage. The system also comprises a first switch arrangement adapted to alternately establish and terminate a communication of power between a primary side comprising the primary power storage and a starter motor of the vehicle and a consumer side comprising an electrical system and an alternator of the vehicle. In addition, the system comprises a second switch arrangement adapted to alternately establish and terminate a communication of power between the consumer side and a secondary side comprising the secondary power storage.

The method comprises the steps of disconnecting the larger primary power storage from the consumer side at an automated crank, and connecting the secondary power storage to the consumer side at an automated crank.

Hence, since the secondary power storage is only utilized at an automated crank, it follows that this power storage can be made very small, which provides advantageous effects in terms of costs, packaging and weight. Moreover, the invention allows the alternator to be connected directly to the electrical system. Hence the electrical system can be provided with power directly from the alternator during operation of the vehicle. In other words, the power does not have to pass through any switches, semiconductors or similar on its way from the alternator to the electrical system, which i.a. simplifies the design and reduces the electrical losses.

Further advantages of the present invention and embodiments thereof will appear from the following detailed description of the invention.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
- Fig. 1: is a schematic illustration of a vehicle 1000 in which an embodiment of the invention is implemented,
- Fig. 2: is a schematic illustration of details in an exemplifying the voltage stabilizing system 150,
- Fig. 3: is a schematic illustration of details in another exemplifying the voltage stabilizing system 150",
- Fig. 4: shows a flowchart of a method according to an embodiment of the invention.

### DETAILED DESCRIPTION OF PREFERRED EMBODIMENTS

### Features in embodiments

The invention deals with problems caused to the electrical system in connection with the start-stop concept on motor vehicles. As indicated in the background, the start-stop concept means that the combustion engine or a similar engine of a vehicle will be stopped e.g. when the velocity of the vehicle is below or equal to a certain threshold value (*i.e.* <X km/h), *e.g.* when the vehicle has come to a complete stop. When the driver wants to drive off, the vehicle automatically starts based on information from sensors e.g. clutch or brake release. The start-stop concept is introduced to save fuel and to reduce the CO₂ emissions.

However, when the engine in a start-stop vehicle is stopped and then started by means of an automated crank the voltage will drop on the electrical systems of the vehicle (e.g. as low as down to about 5-7 V) because of the high current consumption on the starter motor. In a normal crank (when the driver turns the ignition key) in a conventional vehicle, most electrical systems will be turned off in a controlled way. In a start-stop vehicle the electrical systems shall be kept on, *e.g.* the ECU:s (Electronic Control Units) of the vehicle shall not reset. The driver shall not experience function losses. The electrical systems of a typical passenger car is designed for a voltage between 9-16V. If the voltage drops below about 9V the ECU:s may reset and the diagnostic systems etc will create fault codes and cause disturbances on the complete electrical system.

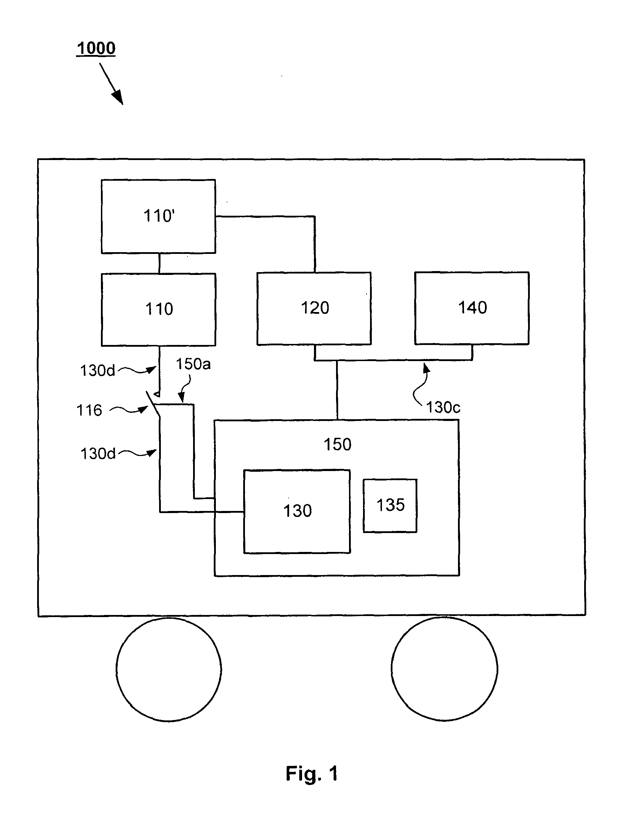

In view of the above an improved start stop concept is provided by an embodiment of the invention implemented in a vehicle 1000 as schematically shown in Fig. 1. As can be seen in Fig. 1, the vehicle 1000 comprises a starter motor 110 for starting the engine 110' of the vehicle 1000, an alternator 120 for charging the batteries in the vehicle, a large primary battery 130, a small secondary battery 135 and an electrical system 140.

The vehicle 1000 may be an automobile or a motor car, e.g. a passenger car or similar. However, embodiments of the invention can be implemented in other wheeled motor vehicles that carries its own engine, e.g. mopeds or motorcycles (e.g. three wheeled mopeds and/or motorcycles) and lorries or trucks or similar.

The starter motor 110 may be any starter motor suitable for starting a combustion engine or similar engine. Hence, the starter motor 110 may e.g. be either a permanent-magnet or a series- or series-parallel wound direct current electric motor with a solenoid switch mounted on it as is well known in the art. Typically, when a current is applied to the solenoid it pushes out a drive pinion on a starter driveshaft and meshes the pinion with a ring gear on a flywheel of the engine 110' in the vehicle 1000. However, embodiments of the invention can be implemented in connection with other electrically powered starter motors, e.g. electrical starter motors that at least partly utilize hydraulic and/or pneumatic principles or similar.

The alternator 120 may be any electromechanical device that is adapted and/or arranged to convert mechanical energy provided from the engine 110' of the vehicle 1000 to electrical energy, e.g. an AC electrical generator. Here, it is presumed that the alternator 120 is suitable for charging the batteries 130, 135 and for providing electric energy to the electrical system 140 during operation of the vehicle 1000.

As will be explained in more detail later, it is preferred that the larger first primary battery 130 is arranged so as to be operatively used both for cranking the engine of the vehicle 1000 and for supplying electrical power to the electrical system 140 of the vehicle 1000. Hence, it is preferred that the primary battery 130 has a capacity of more than approximately 50, 100, 150 Ah or even more than approximately 200 Ah. The primary battery 130 may alternatively be a supercapacitor or a fuel cell or any other suitable electric energy storage device.

As will be explained in more detail later, it is preferred that the smaller secondary battery 135 is arranged so as to be operatively used only for temporarily stabilizing the voltage to the electrical system 140 during an automated crank. Hence, it is preferred that the secondary battery 135 has a capacity of less than approximately 5, 10 Ah or less than approximately 20 Ah. In other words, it is preferred that at least one of the capacity, the size or the weight of the smaller secondary battery 135 is less than 10% (=1/10), or less than 20% (=1/5) or less than 30% (=1/3) or less than 40% (2/5) or at least less than 50% (1/2) of the larger primary battery 130. From this it can be readily understood that the smaller battery 135 can have a small size that allows flexibility in terms of packaging in the vehicle 1000. The comparably low weight of the battery 135 is also important when designing light weight and energy efficient vehicles. The secondary battery 135 may alternatively be a supercapacitor or a fuel cell or any other suitable electric energy storage device.

The electrical system 140 may be formed by several electrical systems, which may be regarded as electrical subsystems. For example, the electrical system 140 may comprise several of: exterior lights, display lights, interior lights, infotainment systems, air-conditioning systems, heater blower and other blowing systems, seat heaters, window heaters, wipers and similar. Indeed, the electrical system 140 may also comprise several of the various ECUs in the vehicle 1000. The main systems in a modern motor vehicle are typically provided with at least one of these ECUs or similar. For example, the internal engine 110' of the vehicle 1000 may be controlled by at least one ECU provided with the suitable software for adjusting the fuel delivery system and/or the ignition system. Similarly, the Anti-Lock Braking System (ABS) may be controlled by an ECU provided with the suitable software for adjusting the braking action of the brakes of the vehicle depending on variables such as the vehicle speed, the weight of the vehicle and the property of the vehicle chassis etc. Another ECU may e.g. be provided with the suitable software for controlling the light system within the passenger compartment, e.g. so as to illuminate the entry or exit when a door is opened and/or so as to dim the light in the passenger compartment when the doors are closed etc. Many other software-operated ECUs may be utilized in modern vehicles.

As used herein it is preferred that electrical system 140 of the vehicle comprises more than about 25%, or preferably more than about 50%, or even more preferably more than about 75%, or most preferred more than about 90% of all electrical systems in the vehicle 1000. In addition, as referred to herein it is preferred that the electrical system 140 in full operation consumes more that about 25%, or preferably more than about 50%, or even more preferably more than about 75%, or most preferred more than about 90% of the electrical power produced in the vehicle 1000. It is also preferred that that electrical system 140 of the vehicle as referred to herein does not comprise the electrical systems used for cranking the engine 110' of the vehicle 1000, most notably the starter motor 110. However, other parts of the electrical systems used for cranking the engine 110' may form a part of the electrical system 140 without departing from the present invention.

In addition, as can be seen in Fig. 1, the vehicle 1000 comprises a voltage stabilizing system 150. The voltage stabilizing system 150 comprises the primary battery 130 and the secondary battery 135 and is preferably further implemented by means of hardware and/or software, and may comprise and/or be formed by one or several hardware units and/or software modules, e.g. one or several processor units provided with or having access to the appropriate software and hardware required for the functions to be performed by the voltage stabilizing system 150. The voltage stabilizing system 150 is arranged to operatively stabilize the voltage provided to the electrical system 140 from the primary battery 130 and/or from the secondary battery 135 in connection with an activation of the starter motor 110, primarily during an automated crank. As previously indicated, an activation of the starter motor without any voltage stabilization will otherwise cause a substantial drop in the voltage provided to the electrical system 140 due to the high current consumption of the vehicle starter motor 110.

The alternator 120 is connected to the electrical systems 140 via a power supply interface 130c, which in turn is connected to the stabilizing system 150. The starter-motor 110 is connected to the primary battery 130 via a power supply interface 130d and a starter switch 116. In turn, the starter switch 116 may be directly or indirectly connected to the stabilizing system 150 by a first control interface 150a. This enables the stabilizing system 150 to monitor the switch 116 and/or actuate the switch 116 during an automated crank such that the starter motor 110 is provided with power from the primary battery 130 for starting the engine of the vehicle 1000. Indeed, a starter switch actuated by a control device at an automated crank for starting the engine of a vehicle is well known per se. Hence, the starter switch and its control at an automated crank need no further description as such. It should be added that the same starter switch 116 may also be actuated when the driver turns the ignition key at a normal crank.

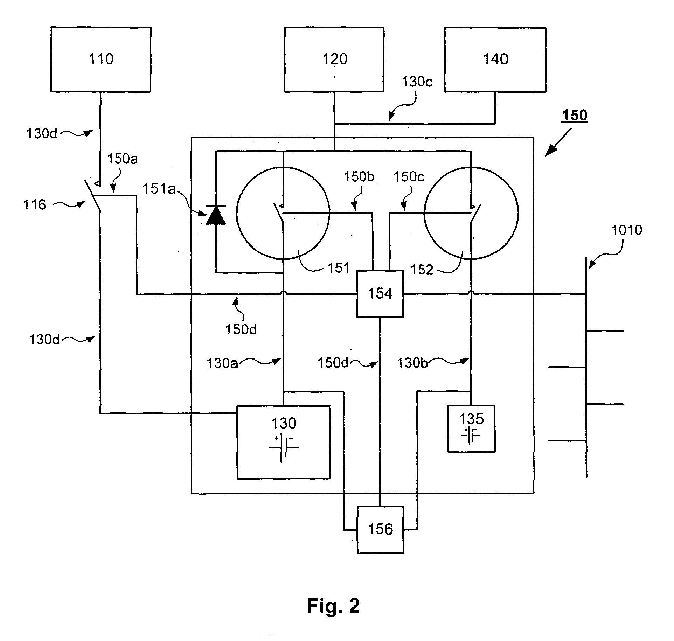

The attention is now directed to Fig. 2 wherein details of an embodiment of the stabilizing system 150 are schematically illustrated. The voltage stabilizing system 150 in Fig. 2 is the same as the voltage stabilizing system 150 in Fig. 1. However, in Fig. 2 it has been specified that the voltage stabilizing system 150 comprises a first switch arrangement 151 that is connected to the primary battery 130 via a power supply interface 130a and to the alternator 120 and the electrical system 140 via the power supply interface 130c. In addition, the stabilizing system 150 comprises a second switch arrangement 152 that is connected to the primary battery via a second power supply interface 130b and to the alternator 120 and the electrical system 140 via the power supply interface 130c.

At least one of the first switch arrangement 151 and the second switch arrangement 152 may be a relay arrangement. In case of a relay arrangement it is preferred that a diode 151 a is arranged over the first switch arrangement 151 so as to secure power from the primary battery 130 to the electrical system 140, even when the first switching arrangement 151 is in a non-conducting state. This ensures that the inductances and/or capacitances in the electrical system 140 are always charged before the relay arrangements 151, 152 are closed which improves life of the relay arrangements 151, 152.

However, rather than a relay arrangement, it is preferred that at least one and preferably both of said first and second switch arrangement 151, 152 are a FET arrangement (Field Effect Transistor) comprising one FET or a plurality of FETs in parallel. The FET in question may, e.g. be any of a MOSFET (Metal-Oxide-Semiconductor Field-Effect Transistor), a JFET (Junction Field-Effect Transistor), a MESFET (Metal-Semiconductor Field-Effect Transistor), a HEMT (High Electron Mobility Transistor) also called a HFET (Heterostructure Field-Effect Transistor), a MODFET (Modulation-Doped Field-Effect Transistor), FREDFET (Fast Reverse or Fast Recovery Epitaxal Field-Effect Transistor) or a DNAFAD or any other FET or FET-like switching device that is suitable for the various embodiments of the present invention.

Moreover, as can be seen in Fig. 2, the stabilizing system 150 comprises a control unit 154 for controlling the operation of the first FET 151 and the second FET 152. The control unit 154 may be implemented by means of hardware and/or software, and it may comprise one or several hardware units and/or software modules which units and modules may be centralized or distributed. For example, the control unit 154 may comprise one or several processor units provided with or having access to the appropriate software and hardware required for the functions to be performed by the voltage stabilizing system 150. It is preferred that the control unit 154 is connected to a controlling gate or similar of the first FET 151 via a control interface 150b and to a controlling gate or similar of the second FET 152 via a control interface 150c. As is well known, the controlling gate of a FET is adapted to be energized so as to set the conducting channel in the FET into a conducting or non-conducting state. It is also well known that the same is applicable *mutatis mutandis* to a relay, which typically has a coil that is adapted to set the contacts in the relay into a conducting or non-conducting state.

It is also preferred that the control unit 154 is connected to the central control system (not shown) of the vehicle 1000 so as to receive information from vehicle sensors such as speed sensors and/or sensors detecting actuation of the break pedal and/or the throttle pedal and/or the ignition switch and/or the presently selected gear etc. This may e.g. be accomplished by connecting the control unit 154 to the central communication network 1010 of the vehicle, e.g. a CAN-bus or a MOST-network or similar as is well known in the art. As can be further seen in Fig. 2 it is also preferred that the control unit 154 is adapted to directly or indirectly control and/or sense the status of the starter switch 116 adapted to energize the starter motor 110.

In addition, it is also preferred that the control unit 154 is connected to a voltmeter 156 or similar via a fourth control connection 150d for receiving information about the current voltage of the primary battery 130. In turn, the voltage meter 156 may be connected to the primary battery 130 via an extension of the power supply interface 130a for measuring the voltage of the battery 130, particularly the battery voltage during an automated crank. Similarly, the voltage meter 156 may be connected to the secondary battery 135 an extension of the power supply interface 130b for measuring the voltage of the battery 135. The voltage meter 156 may be a separate unit or an integral part of the control unit 154. The voltmeter 154 may be any suitable voltmeter capable of detecting the voltage of a battery and capable of producing an output (e.g. an analogue or digital value) corresponding to the measured voltage that can be used by the control unit 154. Such voltmeters are well known in the art and they need no further description.

The features of the exemplifying stabilizing system 150 illustrated in Fig. 2 enables the control unit 154 to alternately connect and disconnect the larger primary battery 130 to the starter motor 110 via the starter switch 116 for cranking the engine of the vehicle 1000 at an automated crank. It also enables the control unit 154 to alternately connect and disconnect the larger primary battery 130 to and from the alternator and the 120 and the electrical system 140 via the bidirectional first FET 151. In addition, it enables the control unit 154 to alternately connect and disconnect the smaller secondary battery 135 to and from the alternator and the 120 and the electrical system 140 via the bidirectional second FET 152.

As will be described in more detail later, during, an automated crank the control unit 154 is arranged to activate the first FET 151 so that the electrical system 140 and preferably also the alternator 120 are disconnected from the starter motor 110 and the primary battery 130, and arranged to activate the second FET 152 so that the smaller secondary battery 135 is connected to the electrical system 140 for stabilizing the voltage provided to the electrical system 140 during the automated crank. While the engine of the vehicle 1000 is running normally after an automated crank it is preferred that the control unit 154 activates the first FET 151 so that that the alternator 120 is connected to the primary battery 130, at least when the battery 130 needs charging, which e.g. can be detected by means of the voltage meter 156.

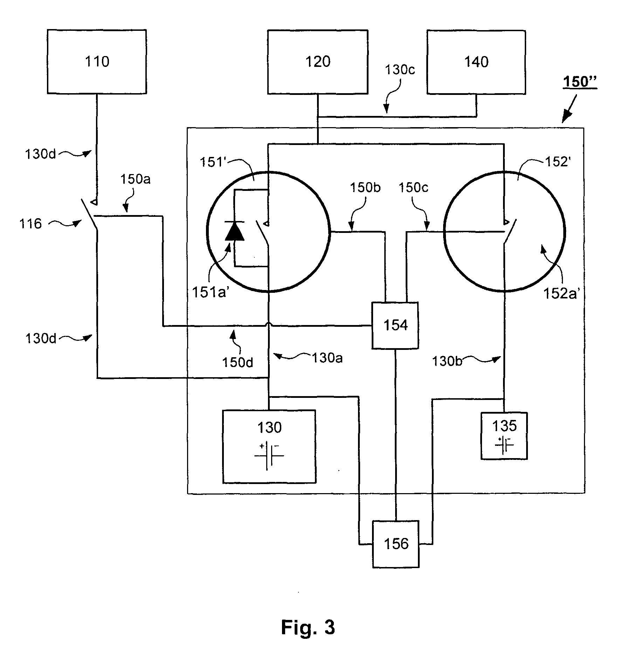

The attention is now directed to Fig. 3, wherein details of another embodiment of the voltage stabilizing system 150 are schematically illustrated. The voltage stabilizing system 150" in Fig. 3 is the same or similar as the voltage stabilizing system 150 in Fig. 1 and Fig. 2 respectively. However, in Fig. 3 it has been specified that the voltage stabilizing system 150" comprises a first FET 151' and a second FET 152' of particular types. It is preferred that the conducting channel of the first FET 151' is open for conducting a current when it is not energized and closed when it is energized. Moreover, it is preferred that the conducting channel of the second FET 152' is closed for not conducting a current when it is not energized and open for conducting a current when it is energized.

The fact that the channel in the first FET 151' is conducting when the FET 151' is not energized implies that the electrical system 140 can be provided with power from the larger primary battery 130 even when the voltage stabilizing system 150" is shut down (i.e. not powered up), which e.g. may occur when the vehicle 1000 is parked with the engine turned off. Hence, if one or more of the electrical systems in the electrical system 140 is still turned on, e.g. the lights, the air condition, the windshield wipers, the infotainment system etc, they will be provided with power from the larger primary battery 130 even if the voltage stabilizing system 150" is shut down. Likewise, the fact that the channel in the second FET 152' is not conducting current when the FET 152' is not energized by the control unit 154 implies that the electrical system 140 cannot be provided with power from the smaller secondary battery 135 when the voltage stabilizing system 150" is shut down (i.e. not powered up). Hence, when the alternator 120 is not charging the electrical system all power is taken from the primary battery 130, duly controlled by the control unit 154 when the voltage stabilizing system 150" is powered up during start-stop operation and automatically in a passive manner when the voltage stabilizing system 150" is shut down.

Moreover, as can be seen in Fig. 3 the first FET 151' has been provided with an intrinsic body diode 151 a'. The occurrence and the function of an intrinsic body diode in a FET are well know to those skilled in the art, e.g. in connection with power MOSFETs adapted to switch high currents. Hence, there is no need for a detailed description of the body diode 151 a' as such.

The body diode 151 a' in the first FET 151' is arranged so as to operate as an alternative conducting path from the primary battery 130 to the electrical system 140. Hence, the function of the body diode 151' is the same or similar as the function of the diode 151a described above with reference to Fig. 2. This secures a power supply from the large primary battery 130 to the electric system 140, even if the ordinary conducting channel of the first FET 151' malfunctions. It should also be noted that the diode 151 a' blocks any current flow in the reverse direction, which means that a voltage drop on the primary battery 130, e.g. during an automated crank, will not pass through the diode 151a' to affect the voltage supply from the secondary battery 135 to the electrical system 140.

The voltage stabilizing units 150 and 150" described above are arranged so as to accomplish one or more of the following:
- During an automated crank substantially all power to the starter motor 110 is taken from the larger primary battery 130.
- During an automated crank substantially all power to the electrical system 140 of the vehicle 1000 is taken from the smaller secondary battery 135.
- When the alternator 120 is inactive (i.e. not providing power) all power to the electrical system 140 should be taken from the primary battery 130. This may e.g. occur when the engine of the vehicle is temporarily stopped, which in the start-stop vehicle 1000 occurs when the velocity of the vehicle is below or equal to a certain threshold value (i.e. <X km/h), e.g. when the vehicle has come to a complete stop.

### Operation of embodiments

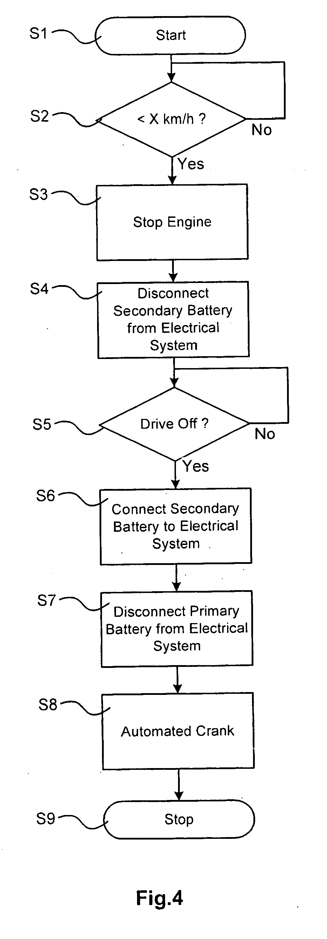

The attention is now directed to the function of an exemplifying embodiment of the present invention. The embodiment is described with reference to Fig. 1-3, and Fig. 4 showing a flowchart illustrating the steps of an exemplifying method for providing an improved start-stop concept for motor vehicles. The method is performed by means of the voltage stabilizing system 150 or 150" described above.

In a first step S1 of the exemplifying method it is preferred that the engine of the vehicle 1000 is started. This may e.g. be performed by the driver inserting and/or turning a starter key in the ignition lock as is well known in the art. It is preferred that this step S1 also includes the drive off.

In a second step S2 of the exemplifying method it is preferred that the control unit 154 checks whether the velocity of the vehicle 1000 is below a certain threshold (<X km/h). This may e.g. be performed by the control unit 154 requesting this information from the communication network 1010 of the vehicle 1000. The control unit 154 continues to perform this check until the velocity falls below the threshold. The process proceeds to the next step when this occurs.

However, it should be emphasized that other conditions may have to be fulfilled in additional to said threshold condition (<X km/h) before the process proceeds to the next step wherein the engine 110' is stopped. For example, the engine 110' may not be stopped if the engine temperature is below normal operational temperature, or if the charging status of at least one of the batteries 130, 135 is below acceptable levels. The invention as described herein does not preclude that it is checked in step S2 whether such additional conditions are satisfied before the process proceeds to the next step.

In a third step S3 of the exemplifying method it is preferred that the control unit 154 stops the engine. The control unit 154 may *e.g.* perform this by communication the appropriate instructions to the central control system of the vehicle 1000 via the communication network 1010, whereupon the central control system stops the engine. Before we proceed it should be added that some other system than the voltage stabilizing system 150 or 150" may be used to check the velocity of the vehicle 1000 in step S2 and to stop the vehicle engine in step S3.

In a fourth step S4 of the exemplifying method it is preferred that the control unit 154 disconnects the secondary battery 135 from the electrical system 140 by means of actuating the second FET 152, 152' or similar.

In a fifth step S5 of the exemplifying method it is preferred that the control unit 154 checks whether the driver of the vehicle 1000 intends to drive off, which includes the intention to increase the velocity of the vehicle 1000. This can e.g. be detected by sensors reacting on e.g. clutch and/or break release and/or on throttle pedal actuation. This may e.g. be performed by the control unit 154 requesting this information from the communication network 1010 of the vehicle 1000. The control unit 154 continues to perform this check until a drive off is detected. The process proceeds to the next step when this occurs.

However, it should be emphasized that other conditions in addition to said drive off condition may trigger the process to proceeds to the subsequent steps wherein the engine 110' is eventually started. For example, the engine 110' may have to be started to power the alternator 120 if the electric power consumption exceeds a predetermined level in the period when the engine 110' is stopped, which e.g. may happen if the air condition is heavily loaded a hot summer day. The invention as described herein does not preclude that it is checked in step S5 whether such additional or alternative conditions may trigger the process to proceed to the next step.

In a sixth step S6 of the exemplifying method it is preferred that the control unit 154 connects the electrical system 140 to the secondary battery 135 by means of actuating the second FET 152, 152' or similar.

In a seventh step S7 of the exemplifying method it is preferred that the control unit 154 disconnects the primary battery 130 from the electrical system 140 by means of actuating the first FET 151, 151' or similar. It is preferred that the primary battery 130 is always disconnected from the electrical system during an automated crank. However, embodiments of the present invention may only disconnect the primary battery 130 during an automated crank when the voltage from the primary battery 130 decreases below a certain predetermined threshold value.

In an eighth step S8 of the exemplifying method it is preferred that the control unit 154 performs an automated crank. This includes starting the engine 110' of the vehicle 1000, which preferably is performed by actuating the starter switch 116 on command from the control unit 154.

In a ninth step S9 of the exemplifying method it is preferred that the control unit 154 terminates the automated crank by stop actuating the starter switch 116, connecting the primary battery 130 to the electrical system 140.

With the solution according to the embodiment of the invention discussed above substantially all disadvantages of using relays are solved. The two FETs can handle the current (high and low), number of activations, no noise and quick activations. Plus if there is any problem with the control of the FET there will always be power supply to the electrical system through the body diode in the FET.

The present invention has now been described with reference to exemplifying embodiments. However, the invention is not limited to the embodiments described herein. On the contrary, the full extent of the invention is only determined by the scope of the appended claims.

## Claims

1. A voltage stabilizing system (150") for stabilizing the voltage provided to an electrical system (140) in a start-stop vehicle (1000) at an automated crank, which system (150") comprises a primary power storage (130) and a secondary power storage (135), and a first switch arrangement (151') adapted to alternately establish and terminate a communication of power between a primary side comprising the primary power storage (130) and a starter motor (110) of the vehicle (1000), and a consumer side comprising an electrical system (140) and an alternator (120) of the vehicle (1000), a second switch arrangement (152') adapted to alternately establish and terminate a communication of power between the consumer side and a secondary side comprising the secondary power storage (135), and a control unit (154) adapted to operate said first switch arrangement (151') so as to disconnect the primary power storage (130) from the consumer side at an automated crank and to connect the secondary power storage (135) to the consumer side at an automated crank, wherein:
- the first switch arrangement (151') comprises at least a first Field Effect Transistor arrangement and the second switching arrangement (152') comprises at least a second Field Effect Transistor arrangement, and
- the first Field Effect Transistor arrangement comprises an intrinsic body diode (151 a') adapted to operatively provide an alternative communication of power from the primary power storage (130) to the consumer side.

2. The voltage stabilizing system (150, 150") according to claim 1
**characterised in that**;
the primary power storage (130) is substantially larger than the secondary power storage (135).

3. The voltage stabilizing system (150, 150") according to claim 1
**characterised in that**;
the control unit (154) is adapted to disconnect the secondary power storage (135) from the consumer side while the engine (110) of the vehicle (1000) is stopped.

4. The voltage stabilizing system (150, 150") according to claim 1
**characterised in that**;
the control unit (154) is adapted to connect the secondary power storage (135) to the consumer side before the primary power storage (130) is disconnected from the consumer side at an automated crank.

5. The voltage stabilizing system (150, 150") according to claim 1,
**characterised in that**;
the control unit (154) is adapted to disconnect the primary power storage (130) from the consumer side at an automated crank when the voltage from the primary power storage (130) decreases below a certain predetermined threshold value.

6. A start-stop vehicle (1000) comprising a voltage stabilizing unit (150, 150") according to any preceding claim 1, 2, 3, 4, or 5.

7. A method in a voltage stabilizing system (150") for stabilizing the voltage provided to an electrical system (140) in a start-stop vehicle (1000) at an automated crank, which system (150") comprises a primary power storage (130) and a secondary power storage (135), and a first switch arrangement (151') adapted to alternately establish and terminate a communication of power between a primary side comprising the primary power storage (130) and a starter motor (110) of the vehicle (1000) and a consumer side comprising an electrical system (140) and an alternator (120) of the vehicle (1000), and a second switch arrangement (152') adapted to alternately establish and terminate a communication of power between the consumer side and a secondary side comprising the secondary power storage (135),
which method comprises the steps of:
- utilizing a first switch arrangement (151') comprising at least a first Field Effect Transistor arrangement,
- utilizing second switching arrangement (152') comprising at least a second Field Effect Transistor arrangement,
- utilizing an intrinsic body diode (151a') of the first Field Effect Transistor arrangement so as to operatively provide an alternative communication of power from the primary power storage (130) to the consumer side.
- disconnecting the larger primary power storage (130) from the consumer side at an automated crank, and
- connecting the secondary power storage (135) to the consumer side at an automated crank.

8. The method according to claim 7,
which method comprises the steps of:
utilizing a primary power storage (130) that is substantially larger than the secondary power storage (135).

9. The method according to claim 7
which method comprises the steps of:
disconnecting the secondary power storage (135) from the consumer side while the engine (110) of the vehicle (1000) is stopped.

10. The method according to claim 7
which method comprises the steps of:
connecting the secondary power storage (135) to the consumer side before the primary power storage (130) is disconnected from the consumer side at an automated crank.

11. The method according to claim 7
which method comprises the steps of:
disconnecting the primary power storage (130) from the consumer side at an automated crank when the voltage from the primary power storage (130) decreases below a certain predetermined threshold value.

## Patentansprüche

1. Spannungsstabilisierungssystem (150") zum Stabilisieren der Spannung, die einem elektrischen System (140) in einem Start-Stopp-Fahrzeug (1000) an einer automatisierten Kurbel zugeführt wird, wobei das System (150") einen primären Energiespeicher (130) und einen sekundären Energiespeicher (135) sowie eine erste Schalteranordnung (151') umfasst, die dafür ausgelegt ist, wechselweise eine Energieübertragung zwischen einer Primärseite, welche den primären Energiespeicher (130) und einen Anlasser (110) des Fahrzeugs (1000) umfasst, und einer Verbraucherseite, welche ein elektrisches System (140) und eine Lichtmaschine (120) des Fahrzeugs (1000) umfasst, herzustellen und zu beenden, und das eine zweite Schalteranordnung (152') umfasst, die dafür ausgelegt ist, wechselweise eine Energieübertragung zwischen der Verbraucherseite und einer Sekundärseite herzustellen und zu beenden, welche den sekundären Energiespeicher (135) umfasst, sowie eine Steuereinheit (154) aufweist, die dafür ausgelegt ist, die erste Schalteranordnung (151') zu betätigen, um den primären Energiespeicher (130) von der Verbraucherseite an einer automatisierten Kurbel zu trennen und den sekundären Energiespeicher (135) mit der Verbraucherseite an einer automatisierten Kurbel zu verbinden, wobei:
- die erste Schalteranordnung (151') wenigstens eine erste Feldeffekttransistor-Anordnung umfasst und die zweite Schalteranordnung (152') wenigstens eine zweite Feldeffekttransistor-Anordnung umfasst, und
- die erste Feldeffekttransistor-Anordnung eine spezifische Body-Diode (151a') umfasst, die dafür ausgelegt ist, einen wechselweisen Energieaustausch von dem primären Energiespeicher (130) zur Verbraucherseite zu ermöglichen.

2. Ein Spannungsstabilisierungssystem (150, 150") nach Anspruch 1, **dadurch gekennzeichnet, dass** der primäre Energiespeicher (130) wesentlich größer ist als der zweite Energiespeicher (135).

3. Ein Spannungsstabilisierungssystem (150, 150") nach Anspruch 1, **dadurch gekennzeichnet, dass** die Steuereinheit (154) dafür ausgelegt ist, den sekundären Energiespeicher (135) von der Verbraucherseite zu trennen, während der Motor (110) des Fahrzeugs (1000) angehalten ist.

4. Ein Spannungsstabilisierungssystem (150, 150") nach Anspruch 1, **dadurch gekennzeichnet, dass** die Steuereinheit (154) dafür ausgelegt ist, den sekundären Energiespeicher (135) mit der Verbraucherseite zu verbinden, bevor der primäre Energiespeicher (130) von der Verbraucherseite an einer automatischen Kurbel getrennt wird.

5. Ein Spannungsstabilisierungssystem (150, 150") nach Anspruch 1, **dadurch gekennzeichnet, dass** die Steuereinheit (154) dafür ausgelegt ist, den primären Energiespeicher (135) von der Verbraucherseite an einer automatischen Kurbel zu trennen, wenn die vom primären Energiespeicher (130) bereitgestellte Spannung unter einen bestimmten vorbestimmten Schwellenwert absinkt.

6. Ein Start-Stopp-Fahrzeug (1000), umfassend eine Spannungsstabilisierungseinheit (150, 150") nach einem der vorhergehenden Ansprüche 1, 2, 3, 4 oder 5.

7. Verfahren in einem Spannungsstabilisierungssystem (150") zum Stabilisieren der Spannung, die einem elektrischen System (140) in einem Start-Stopp-Fahrzeug (1000) an einer automatisierten Kurbel zugeführt wird, wobei das System (150") einen primären Energiespeicher (130) und einen sekundären Energiespeicher (135) sowie eine erste Schalteranordnung (151') ') umfasst, die dafür ausgelegt ist, wechselweise eine Energieübertragung zwischen einer Primärseite, welche den primären Energiespeicher (130) und einen Anlasser (110) des Fahrzeugs (1000) umfasst, und einer Verbraucherseite, welche ein elektrisches System (140) und eine Lichtmaschine (120) des Fahrzeugs (1000) umfasst, herzustellen und zu beenden, und das eine zweite Schalteranordnung (152') umfasst, die dafür ausgelegt ist, wechselweise eine Energieübertragung zwischen der Verbraucherseite und einer Sekundärseite herzustellen und zu beenden, welche den sekundären Energiespeicher (135) umfasst, wobei das Verwenden einer ersten Schalteranordnung (151'), die wenigstens eine erste Feldeffekttransistor-Anordnung umfasst,
- Verwenden einer zweiten Schalteranordnung (152'), die wenigstens eine zweite Feldeffekttransistor-Anordnung umfasst,
- Verwenden einer spezifischen Body-Diode (151a') der ersten Feldeffekttransistor-Anordnung, um so im Betrieb wechselweise einen Energieaustausch von dem primären Energiespeicher (130) zu der Verbraucherseite zu ermöglichen,
- Trennen des größeren primären Energiespeichers (130) von der Verbraucherseite an einer automatisierten Kurbel, und
- Verbinden des sekundären Energiespeichers (135) mit der Verbraucherseite an einer automatisierten Kurbel.

8. Ein Verfahren nach Anspruch 7, wobei das Verfahren folgenden Schritt umfasst:
Verwenden eines primären Energiespeichers (130), der wesentlich größer ist als der sekundäre Energiespeicher (135).

9. Ein Verfahren nach Anspruch 7, wobei das Verfahren folgenden Schritt umfasst:
Trennen des sekundären Energiespeichers (135) von der Verbraucherseite, während der Motor (110) des Fahrzeuges (1000) angehalten ist.

10. Ein Verfahren nach Anspruch 7, wobei das Verfahren folgende Schritte umfasst:
Verbinden des sekundären Energiespeichers (135) mit der Verbraucherseite, bevor der primäre Energiespeicher (130) von der Verbraucherseite an einer automatisierten Kurbel getrennt wird.

11. Ein Verfahren nach Anspruch 7, wobei das Verfahren folgenden Schritt umfasst:
Trennen des primären Energiespeichers (130) von der Verbraucherseite an einer automatisierten Kurbel, wenn die vom primären Energiespeicher (130) bereitgestellte Spannung unter einen bestimmten vorbestimmten Schwellenwert absinkt.

## Revendications

1. Système (150") stabilisateur de tension pour stabiliser la tension fournie à un système électrique (140) dans un véhicule (1000) équipé de la fonction start-stop au moment d'un démarrage automatique, lequel système (150") comprend un dispositif de stockage d'énergie principal (130) et un dispositif de stockage d'énergie secondaire (135), et un premier ensemble de commutation (151') apte à alternativement établir et mettre fin à une communication d'énergie entre un côté principal comprenant le dispositif de stockage d'énergie principal (130) et un démarreur (110) du véhicule (1000), et un côté consommateur comprenant un système électrique (140) et un alternateur (120) du véhicule (1000), un deuxième ensemble de commutation (152') apte à alternativement établir et mettre fin à une communication d'énergie entre le côté consommateur et un côté secondaire comprenant le dispositif de stockage d'énergie secondaire (135), et une unité de commande (154) apte à faire fonctionner ledit premier ensemble de commutation (151') pour déconnecter le dispositif de stockage d'énergie principal (130) du côté consommateur au moment d'un démarrage automatique, dans lequel :
le premier ensemble de commutation (151') comprend au moins un premier ensemble à Transistor à Effet de Champ et le deuxième ensemble de commutation (152') comprend au moins un deuxième ensemble à Transistor à Effet de Champ, et
- le premier ensemble à Transistor à Effet de Champ comprend une diode de corps intrinsèque (151a') apte à fournir opérationnellement une communication alternative d'énergie du dispositif de stockage d'énergie principal (130) au côté consommateur.

2. Système (150, 150") stabilisateur de tension selon la revendication 1, ***caractérisé en ce que** :*
le dispositif de stockage d'énergie principal (130) est sensiblement plus grand que le dispositif de stockage d'énergie secondaire (135).

3. Système (150, 150") stabilisateur de tension selon la revendication 1, ***caractérisé en ce que** :*
l'unité de commande (154) est apte à déconnecter le dispositif de stockage d'énergie secondaire (135) du côté consommateur pendant que le moteur (110) du véhicule (1000) est arrêté.

4. Système (150, 150") stabilisateur de tension selon la revendication 1, ***caractérisé en ce que** :*
l'unité de commande (154) est apte à connecter le dispositif de stockage d'énergie secondaire (135) au côté consommateur avant que le dispositif de stockage d'énergie principal (130) ne soit déconnecté du côté consommateur au moment d'un démarrage automatique.

5. Système (150, 150") stabilisateur de tension selon la revendication 1, ***caractérisé en ce que** :*
l'unité de commande (154) est apte à déconnecter le dispositif de stockage d'énergie principal (130) du côté consommateur au moment d'un démarrage automatique lorsque la tension du dispositif de stockage d'énergie principal (130) baisse en dessous d'une certaine valeur de seuil prédéterminée.

6. Véhicule (1000) équipé de la fonction start-stop, comprenant une unité (150, 150") stabilisatrice de tension selon l'une quelconque des revendications 1, 2, 3, 4 ou 5.

7. Procédé pour, dans un système (150") stabilisateur de tension, stabiliser la tension fournie à un système électrique (140) dans un véhicule (1000) équipé de la fonction start-stop au moment d'un démarrage automatique, ledit système (150") comprenant un dispositif de stockage d'énergie principal (130) et un dispositif de stockage d'énergie secondaire (135), et un premier ensemble de commutation (151') apte à alternativement établir et mettre fin à une communication d'énergie entre un côté principal comprenant le dispositif de stockage d'énergie principal (130) et un démarreur (110) du véhicule (1000), et un côté consommateur comprenant un système électrique (140) et un alternateur (120) du véhicule (1000), et un deuxième ensemble de commutation (152') apte à alternativement établir et mettre fin à une communication d'énergie entre le côté consommateur et un côté secondaire comprenant le dispositif de stockage d'énergie secondaire (135),
ledit procédé comprenant les étapes consistant à :
- utiliser un premier ensemble de commutation (151') comprenant au moins un premier ensemble à Transistor à Effet de Champ,
- utiliser un deuxième ensemble de commutation (152') comprenant au moins un deuxième ensemble à Transistor à Effet de Champ,
- utiliser une diode de corps intrinsèque (151a') du premier ensemble à Transistor à Effet de Champ de manière à fournir opérationnellement une communication alternative d'énergie du dispositif de stockage d'énergie principal (130) au côté consommateur,
- déconnecter le dispositif de stockage d'énergie principal (130) du côté consommateur pendant un démarrage automatique, et
- connecter le dispositif de stockage d'énergie secondaire (135) au côté consommateur au moment d'un démarrage automatique.

8. Procédé selon la revendication 7, ledit procédé comprenant les étapes consistant à :
- utiliser un dispositif de stockage d'énergie principal (130) qui est sensiblement plus grand que le dispositif de stockage d'énergie secondaire (135).

9. Procédé selon la revendication 7, ledit procédé comprenant les étapes consistant à :
- déconnecter le dispositif de stockage d'énergie secondaire (135) du côté consommateur pendant que le moteur (110) du véhicule (1000) est arrêté.

10. Procédé selon la revendication 7, ledit procédé comprenant les étapes consistant à :
- connecter le dispositif de stockage d'énergie secondaire (135) au côté consommateur avant que le dispositif de stockage d'énergie principal (130) ne soit déconnecté du côté consommateur au moment d'un démarrage automatique.

11. Procédé selon la revendication 7, ledit procédé comprenant les étapes consistant à :
- déconnecter le dispositif de stockage d'énergie principal (130) du côté consommateur au moment d'un démarrage automatique lorsque la tension du dispositif de stockage d'énergie principal (130) baisse en dessous d'une certaine valeur de seuil prédéterminée.
